# EUROPÄISCHE PATENTSCHRIFT

(11) **EP 0 922 557 B1**
(45) Veröffentlichungstag und Bekanntmachung des Hinweises auf die Patenterteilung: **17.10.2001**
(21) Anmeldenummer: 97121944.9
(22) Anmeldetag: 12.12.1997
(51) Int. Cl.: B29C 47/00, B29C 44/00, E04D 1/36

(54) **Verfahren zum Herstellen einer Abdichtbahn und Abdichtbahn**
Method of producing a sealing strip and sealing strip
Procédé de fabrication d'une bande d'étanchéité et bande d'étanchéité

(43) Veröffentlichungstag der Anmeldung: 16.06.1999
(73) Patentinhaber: HUBER & SUHNER AG, 9100 Herisau (CH)
(72) Erfinder: Görtz, Otto, 8320 Fehraltorf (CH); Spaniol, Werner, 9105 Schönengrund (CH); Vogel, Erik, 9243 Jonschwil (CH)
(74) Vertreter: Hepp, Dieter

(56) Entgegenhaltungen:
- EP-A- 0 035 467
- WO-A-94/13460
- DE-A- 3 905 142
- DE-A- 4 410 199
- NL-A- 6 711 993
- US-A- 4 143 105
- US-A- 4 808 450
- PATENT ABSTRACTS OF JAPAN vol. 009, no. 249 (M-419), 5. Oktober 1985 & JP 60 099629 A (MITSUBISHI YUKA KK), 3. Juni 1985

## Beschreibung

Die Erfindung betrifft ein Verfahren zum Herstellen einer diffusionsoffenen Abdichtbahn und eine solche Abdichtbahn mit den Merkmalen des Oberbegriffs der unabhängigen Patentansprüche.

Solche Abdichtbahnen werden als Unterdachabdichtungen oder Unterspannbahnen bei Steilbedachungen eingesetzt. Die Abdichtbahnen müssen eine Vielzahl von verschiedenen Materialeigenschaften sowohl im Hinblick auf Verarbeitung und Installation als auch im Hinblick auf Dichtigkeit aber erhöhter Feuchtigkeitsdurchlässigkeit erfüllen.

Es sind viele verschiedene Möglichkeiten zum Herstellen solcher Abdichtbahnen bekannt.

Bekannt sind beispielsweise flexible Abdichtbahnen aus PVC, welche weichmacherhaltig sind. Solche Abdichtbahnen sind zwar verschweissbar und deshalb praktisch in der Anwendung, weisen aber eine niedrige Wasserdampfdiffusion auf.

Es ist auch bekannt, Abdichtbahnen auf Basis organischer Polymere herzustellen, welche eine genügende Wasserdampfdiffusion aufweisen. Unter Baustellenbedingungen sind solche Bahnen aber nicht heissluftverschweissbar und auch reissempfindlich.

Ausserdem ist es bekannt, Bahnen auf Basis eines gesinterten Polymerpulvers mit genügender Wasserdampfdiffusion und mit der Möglichkeit der Verschweissbarkeit herzustellen. Aufgrund des Aufbaus sind aber einerseits keine Formteile herstellbar. Andererseits hat die Bahn aufgrund ihres Herstellverfahrens eine hohe Rissanfälligkeit bei Knickbeanspruchung. Das Verfahren zum Herstellen solcher Bahnen ist ausserdem aufwendig.

Aus der EP 678 619 ist beispielsweise eine solche Kunststoffbahn bekannt.

Aus der EP 677 624 und aus der EP 428 851 sind Kunststoffdichtungsbahnen bekannt, welche aus mehreren Schichten aufgebaut sind. Solche Bahnen sind aufwendig in ihrer Herstellung.

Es ist eine Aufgabe der vorliegenden Erfindung, die Nachteile des Bekannten zu vermeiden, insbesondere also ein Verfahren zur Herstellung einer Abdichtbahn und eine Abdichtbahn zu schaffen, welche einfach und wirtschaftlich herstellbar ist, welche sich durch einfache Montage und hohe Widerstandsfähigkeit auszeichnet und welche die geforderten Eigenschaften hinsichtlich Wasserdichtigkeit und erhöhter Wasserdampfdiffusion aufweist.

Die Warenbahn soll insbesondere unter Baustellenbedingungen verschweissbar sein, eine rutschhemmende Oberflächenstruktur aufweisen, welche eine gute Haftung während der Verlegearbeiten bietet und ein ausreichendes Kraft-/Dehnverhalten aufweisen.

Die Abdichtbahn soll ausserdem gleichzeitig auch für Detailausbildungen, beispielsweise Einfassungen von Rohren oder Anschlüsse geeignet sein.

Eine weitere Aufgabe der Erfindung besteht darin, eine Abdichtbahn zu schaffen, welche ohne ökologisch bedenkliche Stoffe wie Halogene, Bitumen, flüchtige Stoffe, Biozide oder Schwermetalle herstellbar ist.

Eine weitere Aufgabe besteht ausserdem darin, eine Abdichtbahn zu schaffen, welche mit polyolefinischen Dichtbändern und Dichtbahnen kompatibel ist und welche auch an Metallbleche fixierbar ist.

Erfindungsgemäss werden diese Aufgaben mit einem Verfahren zur Herstellung einer Abdichtbahn sowie mit einer Abdichtbahn gemäss den Merkmalen der unabhängigen Patentansprüche gelöst.

Die Abdichtbahn soll eine Oberflächenstruktur aufweisen, welche das Ausgleiten des Verlegers auf trockenen und nassen Abdichtbahnen vermeidet.

Erfindungsgemäss wird die wasserdichte diffusionsoffene, das heisst für Wasserdampf durchlässige Abdichtbahn mit einer solchen ein- oder beidseitigen Oberflächenstruktur durch Extrusion einer Polymerschmelze aus einer Breitschlitzdüse hergestellt. Dank der Wahl eines Extrusionsverfahrens kann die Abdichtbahn wirtschaftlich hergestellt werden und weist eine Dicke auf, welche der Warenbahn die geforderten mechanischen Eigenschaften, insbesondere Verschweissbarkeit und Kraft-/Dehnverhalten, verleiht. Unter dem Begriff durchlässig für Wasserdampf wird hier und im folgenden ein Diffusionswert (gleichbedeutend S_{d} = Diffusionsäquivalente Luftschichtdicke in m) von kleiner als 3 m, vorzugsweise von 0,1 m bis 1,5 m verstanden. Wasserdicht bezeichnet Wasserdichtheit gemäss der Versuchsanordnung der EMPA (Eidgenössische Materialprüfungsanstalt). Im Simulationsexperiment mit Landregen (Wassermenge = 1 l/m², Versuchsdauer 12 Stunden), Gewitterregen (Wassermenge 2 l/m², zusätzlich zeitlich konstanter Druck von 300 Pa, Versuchsdauer 3 Stunden) und starkem Gewitterregen (analog wie Gewitterregen aber mit 600 Pa zusätzlich zeitlich konstantem Druck) dürfen in keinem Fall weder örtlich feuchte Stellen noch fliessendes Wasser auf der regenabgewandten Seite austreten. (Bedingungen auf der regenabgewandten Seite: Temperatur 21.1°C, rel. Luftfeuchtigkeit 55±5%, Luftdruck 726 mm Hg).

Zum Erreichen einer zufriedenstellenden Wasserdampfdiffusion wird der Polymerschmelze ein Treibmittel beigefügt. Es hat sich überraschend gezeigt, dass die geforderten Eigenschaften einer Abdichtbahn bei der Verwendung eines Treibmittels in einer hohen Konzentration zu besonders vorteilhaften Ergebnissen, insbesondere zur Bildung einer Oberflächenstruktur führt.

Das Treibmittel muss in einer derartigen Konzentration beigefügt werden, dass bei Austritt der Schmelze aus der Breitschlitzdüse die Oberfläche des Schmelzfilms durch das Spaltgas des Treibmittels aufgebläht wird, wodurch Poren gebildet werden. Unter Poren wird hier und im folgenden eine Oberflächenstruktur verstanden, welche Unebenheiten aufweist und die wasserdampfdurchlässig gemäss obiger Definition ist. Die Grösse der Poren beträgt typischerweise 50 - 300 µm.

Es hat sich nun überraschend herausgestellt, dass die Verwendung von wenigstens einem ersten und einem zweiten Polymer mit unterschiedlichen Schmelzviskositäten in Kombination mit einem Treibmittel zu besonders vorteilhaften Eigenschaften hinsichtlich Wasserdampfdiffusion und zu einer besonderen Oberflächenstruktur führt.

Die gewünschte rutschhemmende Oberflächenstruktur und hohe Wasserdampfdiffusion wird durch den Anteil offener und geschlossener Schaumporen sowie dem Aufschäumungsgrad erreicht. Die Porenstruktur wird neben der Art und Menge des Treibmittels von dem Verhältnis der Polymere mit höherer und tieferer Schmelzviskosität bestimmt und noch von der Schmelztemperatur beeinflusst. Unter Schmelzviskosität wird in diesem Zusammenhang die Viskosität der beiden Polymere bei identischen Extrusionsbedingungen (insbesondere Dimensionen der Extrusionsdüse, Temperatur, Druck, Schergeschwindigkeit) verstanden. Schmelzviskositäten wurden in diesem Zusammenhang mit einem Kapillarrheometer gemessen. Typischerweise sind damit Schmelzviskositäten bei der Extrusion bei 190°C und bei Schergeschwindigkeiten von 200 s zu verstehen.

Der Anteil des ersten Polymers (mit höherer Schmelzviskosität) beträgt vorteilhaft mehr als 40 Gewichtsprozent bezogen auf die Polymerschmelze, insbesondere 40 bis 70 Gewichtsprozent. Die Schmelzviskosität des ersten Polymers ist vorteilhaft um wenigstens einen Faktor zwei höher als die Schmelzviskosität des zweiten Polymers.

Die Konzentration des Treibmittels, welche notwendig zum Erzielen dieses Effekts ist, hängt von den übrigen Verfahrensparametern ab, welche bei der Extrusion der Abdichtbahn eine Rolle spielen. Insbesondere der Druck im Werkzeug, die Temperatur der Polymerschmelze und die Eigenschaften der Polymerschmelze, nehmen Einfluss auf die erforderliche Konzentration an Treibmittel. Die Treibmittelkonzentration muss bei vorbestimmten Prozessparametern so eingestellt werden, dass die durch das Treibmittel erzeugten Gasblasen nicht vollständig im Inneren der extrudierten Abdichtbahn verbleiben, sondern wenigstens teilweise an die Oberfläche der Abdichtbahn treten. Wesentlich ist dabei nicht die Konzentration des Treibmittels, sondern die Ausbeute an Gas, welche bei den Verfahrensbedingungen erzielt werden kann. Die Erfindung erreicht durch den Treibmittelüberschuss in Kombination von Polymeren unterschiedlicher Molekulargewichte bzw. Schmelzviskositäten sowohl die gewünschte, rauhe Oberflächenstruktur als auch die gewünschten Dampf-Diffusionswerte.

In einem besonders bevorzugten Ausführungsbeispiel beträgt die Konzentration des Treibmittels in der Gesamtmischung wenigstens eins bis zehn Gewichtsprozent. Mit Konzentration des Treibmittels wird in diesem Zusammenhang die Konzentration des Wirkstoffs zum Erzeugen des Gases verstanden. Handelsübliche Treibmittel enthalten neben diesen Wirkstoffen noch Zusatzstoffe, so dass die Konzentration des zugegebenen Produktes höher liegt.

Durch einfache Versuche lässt sich der Treibmittelgehalt so einstellen, dass sich die gewünschten Diffusionswerte ergeben. Vor allem die verwendete Polymermischung, die Extrusionstemperatur, der Treibgasüberschuss und der entstehende Werkzeugdruck bestimmen die Art der Porenstruktur und damit die Oberflächenstruktur.

Ausserdem kann die Polymerschmelze zusätzliche Stoffe, beispielsweise 0 bis 5% Farbpigmente, 0 bis 5% Stabilisatoren, 0 bis 40% Zusatzstoffe (z.B. Magnesiumhydroxid oder Aluminiumhydroxid als Flammschutz) oder 0 bis 3% Additive enthalten. Die Konzentration der Polymere ändert sich dabei entsprechend.

Es werden vorteilhaft Polymere wie PP-Copolymere, Ethylen-Ester-Copolymere, LDPE, VLDPE, EPDM oder Mischungen dieser Polymere mit einem geeigneten MFI (Schmelzflussindex) eingesetzt. Der MFI der Mischung beträgt zwischen 0,1 und 20 g pro 10 Minuten, vorteilhaft etwa 0,3 bis 6 g pro 10 Minuten (gemäss DIN 53735, bei 230°C und 2,16 kg).

Es werden vorteilhaft thermoplastische Polymere mit einer Dichte von 0,8 bis 1,7 g/cm3 eingesetzt.

Die Extrusion der Polymerschmelze gemäss dem erfindungsgemässen Verfahren wird vorzugsweise bei einer Temperatur von 130°C bis 220°C durchgeführt. Die Temperatur soll nicht zu hoch gewählt werden, damit die extrudierte Schmelze nicht zu niederviskos ist. Damit kann die Abkühlstrecke auch verhältnismässig kurz gehalten werden.

Der Druck, um das Treibmittel in der Schmelze zu lösen, beträgt etwa 11 bis 15 bar. Die Extrusion wird unter einem Düsendruck von 250 bis 100 bar, insbesondere etwa 200 bar durchgeführt.

Es hat sich herausgestellt, dass der Einsatz von endothermen Treibmitteln besonders vorteilhaft ist. Bei der Verwendung von endothermen Treibmitteln wird die Gasproduktion im Innern der Abdichtbahn während der Abkühlung automatisch beendet. Endotherme Treibmittel führen ausserdem dazu, dass die Temperatur der Schmelze bei Austritt aus der Extrusionsdüse ausreichend niedrig gehalten werden kann. Nach Austritt aus der Extrusionsdüse wird die extrudierte Schmelze über eine Kühlstrecke geführt und abgekühlt. Die extrudierte Bahn wird gegebenenfalls über Kühlwalzen geführt, bevor sie weiterverarbeitet wird.

Exotherme Treibmittel in Kombination mit Mitteln zum Minimieren der Zersetzungstemperatur (Kicker) sind ebenfalls einsetzbar.

Eine derart hergestellte Abdichtbahn weist alle erforderlichen Eigenschaften hinsichtlich Belastbarkeit und Dichtheit auf.

Für besondere Zwecke kann die Abdichtbahn nach Austritt aus der Düse auf ein Trägermaterial aufgebracht werden.

Vor allem im Hinblick auf eine optimale Wasserdampfdiffusion ist der Einsatz von Zellregulatoren in der Polymerschmelze vorteilhaft.

Als besonders vorteilhaft hat sich der Einsatz eine Mischung herausgestellt, welcher 2% Farbpigmente, 0,4% Stabilisatoren, 20% Zusatzstoffe, 1% Additive, 3,5% des Treibmittels und 73,1% eines Polymers bzw. einer Mischung von Polymeren enthält.

Vor allem bei der Herstellung von nicht auf ein Trägermaterial aufgebrachten Abdichtbahnen hat es sich gezeigt, dass ein zugarmes Führen der Abdichtbahn von der Extrusionsdüse über ein gekühltes Glättwerk zu einer Aufwickelvorrichtung vorteilhaft ist. Weil die frisch extrudierte und noch verformbare Warenbahn mit wenig Zug geführt wird, kann Längsschrumpf vermieden werden.

Die erfindungsgemässe extrudierte, diffusionsoffene Abdichtbahn besteht im wesentlichen aus wenigstens einem thermoplastischen Polymer oder Copolymer oder aus einer Mischung von Polymeren oder Copolymeren. Die Abdichtbahn weist eine Oberflächenstruktur auf, welche die Haftung vor allem bei nassen Abdichtbahnen verbessert. Die Oberflächenstruktur wird durch den Einsatz einer hohen Konzentration eines Treibmittels erzeugt. Daraus ergibt sich, dass die Abdichtbahn erfindungsgemäss durchgehend geschäumt ist und dass die OberflächenStruktur durch geschäumte Poren gebildet wird.

Vorteilhaft besteht die Dichtbahn im wesentlichen aus wenigstens einem ersten und einem zweiten Polymer, wobei die Schmelzviskosität des ersten Polymers (bei gleichen Extrusionsbedingungen) höher ist als die Schmelzviskosität des zweiten Polymers.

Bei der Verwendung von mehreren Polymeren mit unterschiedlichen Schmelzviskositäten kann sich eine inhomogene Domänenstruktur einstellen. Dabei sind die beiden Polymere nicht vollständig vermischt, sondern bilden Domänen, in welchem ein Überhang eines der Polymere vorhanden ist. Die Grösse der Domänen kann bis zu 0.1 mm betragen.

Die verhältnismässig geringe Dichte der Abdichtbahn bzw. der hohe Grad der Schäumung führt auch sonst, insbesondere im Hinblick auf Wasserdampfdiffusion, Transportgewicht und Elastizität der Abdichtbahn zu besonders vorteilhaften Resultaten.

Die Abdichtbahn eignet sich besonders für die Verwendung als Unterdachbahn/Unterspannbahn. Es sind aber auch andere Anwendungen denkbar, bei welchem die geforderten Eigenschaften, insbesondere Rutschfestigkeit gefordert sind.

Die Erfindung wird im folgenden anhand der Figuren und in Ausführungsbeispielen näher erläutert.

Es zeigen:
- Figur 1: die Oberfläche einer erfindungsgemässen Abdichtbahn,
- Figur 2: eine schematische Darstellung des Herstellungsverfahrens einer Abdichtbahn im Querschnitt,
- Figur 3: ein alternatives Ausführungsbeispiel eines Herstellungsverfahrens, und
- Figur 4: ein vergrösserter Ausschnitt der Abdichtbahn bei Austritt aus der Extruderdüse.

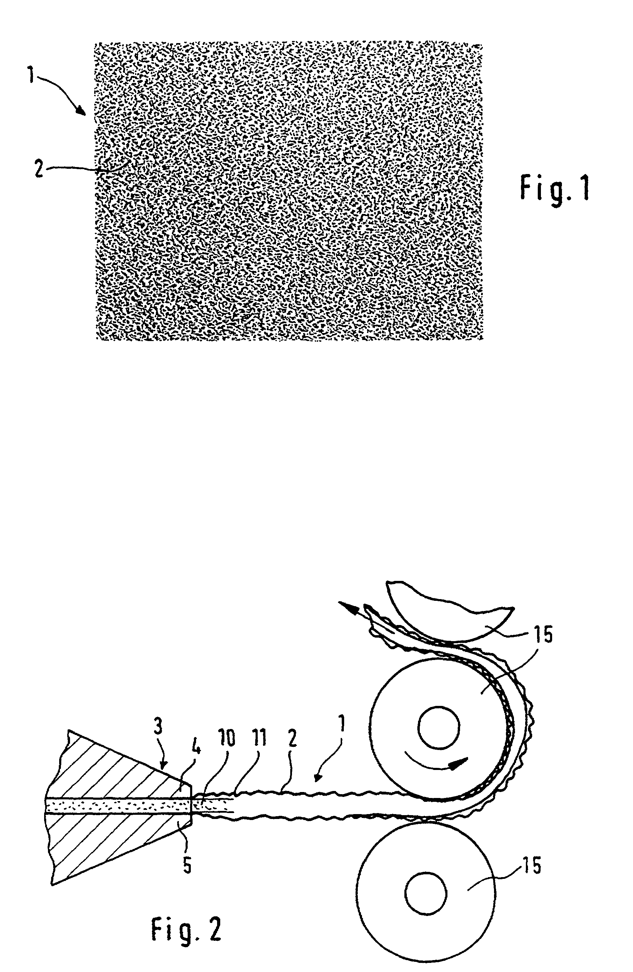

Die Oberfläche der Abdichtbahn weist gemäss Figur 1 eine unregelmässige Struktur auf, welche die Haftreibung bei einer trockenen und nassen Abdichtbahn erhöht. Die unregelmässige Oberflächenstruktur rührt vom Einsatz einer grossen Konzentration an Treibmittel und von der Verwendung von zwei Polymeren mit unterschiedlichen Schmelzviskositäten her. Die Treibmittelkonzentration ist so gross gewählt, dass Gasblasen an der Oberfläche der frisch extrudierten Warenbahn entstehen.

Figur 2 zeigt schematisch eine Abdichtbahn 1 beim Austritt aus einer Extruderdüse 3. Die in der Abdichtbahn 1 durch das Treibmittel erzeugten Blasen 10 steigen wegen den unterschiedlichen Schmelzviskositäten der vorliegenden Polymermischung und der ungenügenden seitlichen Ausdehnungsmöglichkeit an die Oberfläche 2 der Abdichtbahn 1 auf und bilden an der Oberfläche 2 Blasen 10. Innerhalb der Düse ist das Gas aus dem Treibmittel unter dem hohen Druck der im Werkzeug noch in der Schmelze gelöst bzw. komprimiert. Nach Verlassen der Düse expandiert das Treibgas des ausgeformten nunmehr drucklosen Schmelzfilms zu einem porigen Erzeugnis. Die extrudierte Abdichtbahn wird anschliessend über ein schematisch dargestelltes Kühl- und Glättwerk 15 geführt, dabei gekühlt und der weiteren Verarbeitung zugeführt.

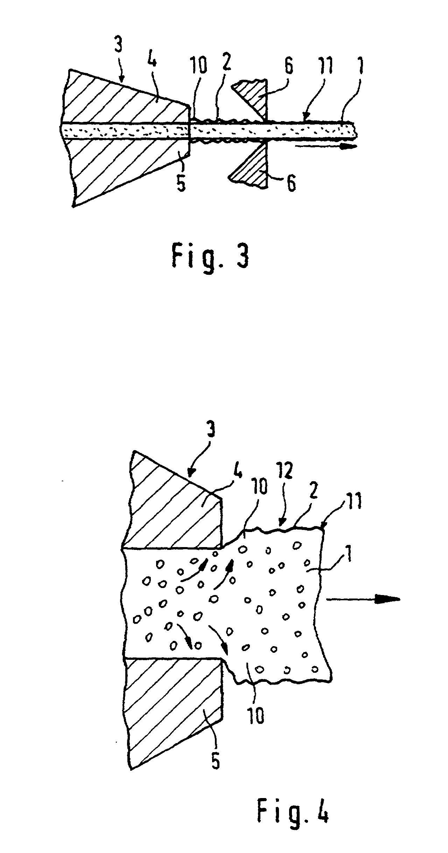

Figur 3 zeigt ein alternatives Ausführungsbeispiel, in welchem die an der Oberfläche 10 der Abdichtbahn 1 erzeugten Poren mit zusätzlichen Rakeln 6 abgestreift und dadurch aufgerissen werden, wobei eine erhöhte Offenporigkeit und H₂O-Dampfdiffusion erreicht wird.

In Figur 4 ist schematisch die Abdichtbahn 1 in vergrösserter Darstellung bei Austritt aus der Extruderdüse 3 gezeigt. Die Abdichtbahn 1 weist durchgehend Poren 10 auf, welche bis an die Oberfläche 2 der Abdichtbahn 1 steigen und an der Oberfläche Blasen bilden.

In den nachfolgend beschriebenen Beispielen wurden für die Differenzierung von unterschiedlichen Schmelzviskositäten die Werte bei 190°C und Schergeschwindigkeiten von 200 s⁻¹ ermittelt (die Schergeschwindigkeit unmittelbar am Düsenspalt ergibt sich aus der Abzugsgeschwindigkeit und der Geometrie der Breitschlitzdüse). Gleichzeitig sind auch die Viskositäten bei 10 s⁻¹ angegeben. Die Werte der Schmelzviskositäten der in den nachfolgenden Beispielen eingesetzten Polymere für verschiedene Schergeschwindigkeiten sind beispielshaft in der Tabelle wiedergegeben.

**Tabelle**

| | Hifax CA 10A | Hifax CA 212A | Hifax CA 60A |
|---|---|---|---|
| Schergeschw. 10 s⁻¹ | 5410 Pa∗s | 1758 Pa∗s | 1107 Pa∗s |
| 75 s⁻¹ | 1439 Pa∗s | 750 Pa∗s | 602 Pa∗s |
| 200 s⁻¹ | 712 Pa∗s | 453 Pa∗s | 377 Pa∗s |
| MFI 230/2.16kg | 0.6 g/10 min | 7 g/10 min | 16 g/10 min |

### Beispiel 1:

Eine Polymermischung bestehend aus:
- 52.5 Teilen Hifax CA 212 A (Montell)
- 35.0 Teilen Hifax CA 10 A (Montell)
- 2 Teilen Farbbatch - grün (Clariant)
- 0.5 Teilen Stabilisatorbatch (Irganox 1010 von Ciba)
- 10 Teilen Supercell 40 EN3 PE (endothermes Treibmittel von Americhem)
wird in einem Doppelschneckenextruder bei einer Zylindertemperatur von 175°C aufgeschmolzen und homogenisiert.

Aus der derart hergestellten Polymerschmelze wird bei einer Massetemperatur von 185°C mit einer Breitschlitzdüse (Breite 2100 mm, Düsenspalt 0.8 mm), bei einem Werkzeugdruck von 200 bar eine Abdichtbahn extrudiert. Die extrudierte Abdichtbahn weist eine Dicke von 1.4 mm, ein Flächengewicht von 800 g/m², eine äquivalente Luftschichtdicke (S_{d}) von 1.7 m (DIN 53122) und eine Dehnung in Längs- und Querrichtung von 380 % und 450 % (DIN 51354) und eine Oberflächenstruktur auf.

Das Treibmittel Supercell 40 EN3 PE enthält 40 % Wirkstoff. 10 Teile Supercell entsprechen also 4 Teilen Wirkstoff.

### Beispiel 2:

Eine Polymermischung bestehend aus:
- 52.5 Teilen Hifax CA 60 A (Montell)
- 35.0 Teilen Hifax CA 10 A (Montell)
- 2 Teilen Farbbatch - grün (Clariant)
- 0.5 Teilen Stabilisatorbatch (Irganox 1010 von Ciba)
- 10 Teilen Supercell 40 EN3 PE (endothermes Treibmittel von Americhem)
wird in einem Doppelschneckenextruder bei einer Zylindertemperatur von 175°C aufgeschmolzen und homogenisiert.

Aus der derart hergestellten Polymerschmelze wird bei einer Massetemperatur von 185°C mit einer Breitschlitzdüse (Breite 2100 mm, Düsenspalt 0.8 mm), bei einem Werkzeugdruck von 200 bar eine Abdichtbahn extrudiert. Die extrudierte Abdichtbahn weist eine Dicke von 1.4 mm, ein Flächengewicht von 790 g/m², eine äquivalente Luftschichtdicke (S_{d}) von 1.6 m (DIN 53122) und eine Dehnung in Längs- und Querrichtung von 405 % und 470 % (DIN 51354) und eine Oberflächenstruktur auf.

### Beispiel 3:

Eine Polymermischung bestehend aus:
- 38.2 Teilen Hifax CA 212 A (Montell)
- 57.3 Teilen Hifax CA 10 A (Montell)
- 2 Teilen Farbbatch - grün (Clariant)
- 0.5 Teilen Stabilisatorbatch (Irganox 1010 von Ciba)
- 2 Teilen Addicell KM399 KE (exothermes Treibmittel von Addicell Additive GmbH)
wird in einem Doppelschneckenextruder bei einer Zylindertemperatur von 180°C aufgeschmolzen und homogenisiert.

Aus der derart hergestellten Polymerschmelze wird bei einer Massetemperatur von 195°C mit einer Breitschlitzdüse (Breite 2100 mm, Düsenspalt 0.8 mm), bei einem Werkzeugdruck von 190 bar eine Abdichtbahn extrudiert. Die extrudierte Abdichtbahn weist eine Dicke von 1.4 mm, ein Flächengewicht von 790 g/m², eine äquivalente Luftschichtdicke (S_{d}) von 1.6 m (DIN 53122) und eine Dehnung in Längs- und Querrichtung von 410 % und 480 % (DIN 51354) und eine Oberflächenstruktur auf.

### Beispiel 4:

Eine Polymermischung bestehend aus:
- 52.5 Teilen Hifax CA 212 A (Montell)
- 35.0 Teilen Hifax CA 10 A (Montell)
- 2 Teilen Farbbatch - grün (Clariant)
- 0.5 Teilen Stabilisatorbatch (Irganox 1010 von Ciba)
- 10 Teilen Supercell 40 EN3 PE (endothermes Treibmittel von Americhem)
wird in einem Doppelschneckenextruder bei einer Zylindertemperatur von 175°C aufgeschmolzen und homogenisiert.

Aus der derart hergestellten Polymerschmelze wird bei einer Massetemperatur von 185°C mit einer Breitschlitzdüse (Breite 2100 mm, Düsenspalt 0.8 mm), bei einem Werkzeugdruck von 205 bar eine Abdichtbahn auf einen Träger Colback S100 (Akzo) extrudiert. Die extrudierte Abdichtbahn weist eine Dicke von 1.5 mm, ein Flächengewicht von 890 g/m², eine äquivalente Luftschichtdicke (S_{d}) von 2.5 m (DIN 53122) und eine Dehnung (Reissdehnung des Trägers) in Längs- und Querrichtung von 35 % und 42 % (DIN 51354) und eine Oberflächenstruktur auf.

### Beispiel 5:

Eine Polymermischung bestehend aus:
- 40.5 Teilen Hifax CA 212 A (Montell)
- 27.0 Teilen Hifax CA 10 A (Montell)
- 20 Teilen Nordel IP 3720 (Du Pont)
- 2 Teilen Farbbatch - grün (Clariant)
- 0.5 Teilen Stabilisatorbatch (Irganox 1010 von Ciba)
- 10 Teilen Supercell 40 EN3 PE (endothermes Treibmittel von Americhem)
wird in einem Doppelschneckenextruder bei einer Zylindertemperatur von 175°C aufgeschmolzen und homogenisiert.

Aus der derart hergestellten Polymerschmelze wird bei einer Massetemperatur von 185°C mit einer Breitschlitzdüse (Breite 2100 mm, Düsenspalt 0.8 mm), bei einem Werkzeugdruck von 200 bar eine Abdichtbahn extrudiert. Die extrudierte Abdichtbahn weist eine Dicke von 1.4 mm, ein Flächengewicht von 780 g/m², eine äquivalente Luftschichtdicke (S_{d}) von 1.8 m (DIN 53122) und eine Dehnung in Längs- und Querrichtung von 490 % und 560 % (DIN 51354), eine Oberflächenstruktur und erhöhte Flexibilität bzw. Weichheit auf.

### Beispiel 6:

Eine Polymermischung bestehend aus:
- 52.5 Teilen Hifax CA 212 A (Montell)
- 35.0 Teilen Hifax CA 10 A (Montell)
- 2 Teilen Farbbatch - grün (Clariant)
- 0.5 Teilen Stabilisatorbatch (Irganox 1010 von Ciba)
- 10 Teilen Genitron DP50/33 (endothermes Treibmittel von Bayer)
wird in einem Doppelschneckenextruder bei einer Zylindertemperatur von 175°C aufgeschmolzen und homogenisiert.

Aus der derart hergestellten Polymerschmelze wird bei einer Massetemperatur von 185°C mit einer Breitschlitzdüse (Breite 2100 mm, Düsenspalt 0.8 mm), bei einem Werkzeugdruck von 195 bar eine Abdichtbahn extrudiert. Die extrudierte Abdichtbahn weist eine Dicke von 1.4 mm, ein Flächengewicht von 800 g/m², eine äquivalente Luftschichtdicke (S_{d}) von 1.7 m (DIN 53122) und eine Dehnung in Längs- und Querrichtung von 370 % und 440 % (DIN 51354) und eine Oberflächenstruktur auf.

### Beispiel 7:

Anstelle einer Polymermischung wird als einziges Polymer Hifax CA 212 A von Montell eingesetzt. Es werden
- 87.5 Teile Hifax CA 212 A (Montell)
- 10.0 Teile Supercell 40 EN3 PE (endothermes Treibmittel von Americhem)
- 2 Teile Farbbatch - grün (Clariant)
- 0.5 Teilen Stabilisatorbatch (Irganox 1010 von Ciba)
in einem Doppelschneckenextruder bei einer Zylindertemperatur von 170°C aufgeschmolzen und homogenisiert.

Aus der derart hergestellten Polymerschmelze wird bei einer Massetemperatur von 180°C mit einer Breitschlitzdüse (Breite 2100 mm, Düsenspalt 0.8 mm), bei einem Werkzeugdruck von 185 bar eine Abdichtbahn extrudiert. Die extrudierte Abdichtbahn weist eine Dicke von 1.4 mm, ein Flächengewicht von 790 g/m², eine äquivalente Luftschichtdicke (S_{d}) von 2.4 m (DIN 53122) und eine Dehnung in Längs- und Querrichtung von 480 % und 530 % (DIN 51354) und eine Oberflächenstruktur auf.

### Beispiel 8:

Eine Polymermischung bestehend aus:
- 47.5 Teilen Hifax CA 212 A (Montell)
- 12.0 Teilen Hifax CA 60 A (Montell)
- 8.0 Teilen Hifax CA 10 A (Montell)
- 2 Teilen Farbbatch - grün (Clariant)
- 0.5 Teilen Stabilisatorbatch (Irganox 1010 von Ciba)
- 10 Teilen Supercell 40 EN3 (endothermes Treibmittel von Americhem)
- 20 Teilen Magnesium Hydroxyd (Magnifin H5 der Martinswerke)
wird in einem Doppelschneckenextruder bei einer Zylindertemperatur von 175°C aufgeschmolzen und homogenisiert.

Aus der derart hergestellten Polymerschmelze wird bei einer Massetemperatur von 185°C mit einer Breitschlitzdüse (Breite 2100 mm, Düsenspalt 0.8 mm), bei einem Werkzeugdruck von 200 bar eine Abdichtbahn extrudiert. Die extrudierte Abdichtbahn weist eine Dicke von 1.4 mm, ein Flächengewicht von 800 g/m², eine äquivalente Luftschichtdicke (S_{d}) von 1.8 m (DIN 53122) und eine Dehnung in Längs- und Querrichtung von 320 % und 380 % (DIN 51354) und eine Oberflächenstruktur auf.

Während die oben dargestellten Beispiele besonders vorteilhafte Auführungsformen der vorliegenden Erfindung zeigen, ist auch der Einsatz einer Vielzahl von anderen Polymeren bzw. Treibmitteln oder Zusatzstoffen denkbar. Erfindungswesentlich ist, dass ein Polymer oder eine Polymermischung aus mindestens zwei Polymeren mit deutlich unterschiedlichen Schmelzviskositäten sowie das Treibmittel in einer derartigen Konzentration beigegeben wird, dass die Gasausbeute so gross ist, dass auch an der Oberfläche der extrudierten Abdichtbahn Blasen entstehen, welche teilweise zerplatzen oder zerstört werden und zu einer unregelmässigen Schaum-Oberflächenstruktur und einer erhöhten offenen Porenstruktur der Abdichtbahn führen. Die Porenstruktur ist derart, dass die vorangehend definierte Wasserdampfdurchlässigkeit erreicht wird.

## Patentansprüche

1. Verfahren zum Herstellen einer wasserdichten, für Wasserdampf durchlässigen Abdichtbahn (1) mit einer Oberflächenstruktur (11) durch Extrusion einer Polymerschmelze aus einer Breitschlitzdüse (3), **dadurch gekennzeichnet, dass** der Polymerschmelze ein Treibgas erzeugendes Treibmittel in einer solchen Konzentration beigefügt wird, dass nach Austreten der Abdichtbahn (1) aus der Breitschlitzdüse (3) aus der Oberfläche (2) der Abdichtbahn Treibgas austritt, wobei eine Oberflächenstruktur gebildet wird.

2. Verfahren nach Anspruch 1, **gekennzeichnet durch** eine Polymerschmelze, die wenigstens ein erstes Polymer und ein zweites Polymer enthält, wobei die Schmelzviskosität des ersten Polymers bei gleichen Extrusionsbedingungen höher ist als die Schmelzviskosität des zweiten Polymers.

3. Verfahren nach Anspruch 2, **dadurch gekennzeichnet, dass** der Anteil des ersten Polymers mit höherer Schmelzviskosität an der Polymerschmelze mehr als 40 Gewichtsprozent, vorzugsweise 40 bis 70 Gewichtsprozent bezogen auf die Polymerschmelze beträgt.

4. Verfahren nach Anspruch 2, **dadurch gekennzeichnet, dass** die Schmelzviskosität des ersten Polymers um wenigstens einen Faktor zwei grösser ist als die Schmelzviskosität des zweiten Polymers.

5. Verfahren nach einem der Ansprüche 1 bis 4, **dadurch gekennzeichnet, dass** durch das austretende Treibgas Blasen (10) an der Oberfläche (2) der Abdichtbahn (1) gebildet werden, welche anschliessend aufgerissen, insbesondere abgestreift werden.

6. Verfahren nach einem der Ansprüche 1 bis 5, **dadurch gekennzeichnet, dass** zum Herstellen der Polymerschmelze Polymere mit einer Dichte von 0,8 bis 1,7 g/cm3 eingesetzt werden.

7. Verfahren nach einem der Ansprüche 1 bis 6, **dadurch gekennzeichnet, dass** die Mischung bei einer Temperatur von 130°C bis 220°C extrudiert wird.

8. Verfahren nach einem der Ansprüche 1 bis 7, **dadurch gekennzeichnet, dass** die Polymerschmelze unter einem Druck in der Extrusionsdüse von 250 bis 100 bar, insbesondere etwa 200 bar extrudiert wird.

9. Verfahren nach einem der Ansprüche 1 bis 8, **dadurch gekennzeichnet, dass** als Treibmittel ein endothermes Treibmittel verwendet wird.

10. Verfahren nach einem der Ansprüche 1 bis 9, **dadurch gekennzeichnet, dass** als Treibmittel ein exothermes Treibmittel insbesondere in Kombination mit einem Mittel zum Minimieren der Zersetzungstemperatur des Treibmittels eingesetzt wird.

11. Verfahren nach einem der Ansprüche 1 bis 10, **dadurch gekennzeichnet, dass** die Abdichtbahn nach Austritt aus der Breitschlitzdüse auf ein Trägermaterial aufgebracht wird.

12. Verfahren nach einem der Ansprüche 1 bis 11, **dadurch gekennzeichnet, dass** der Polymerschmelze Zellregulatoren zugegeben werden.

13. Verfahren nach einem der Ansprüche 1 bis 10, **dadurch gekennzeichnet, dass** die Abdichtbahn nach Austritt aus der Breitschlitzdüse zugarm über ein gekühltes Glättwerk auf eine Aufwickelvorrichtung geführt wird.

14. Extrudierte, wasserdichte, für Wasserdampf durchlässige Abdichtbahn aus wenigstens einem thermoplastischen Polymer und/oder Copolymer oder aus einer Mischung von Polymeren und/oder Copolymeren, wobei die Abdichtbahn eine Oberflächenstruktur aufweist, **dadurch gekennzeichnet, dass** die Abdichtbahn eine durchgehende Schaumstruktur aufweist und dass die Oberflächenstruktur durch zerstörte Blasen, insbesondere durch hervorstehende Poren gebildet wird.

15. Abdichtbahn nach Anspruch 12, **dadurch gekennzeichnet, dass** die Abdichtbahn einen Diffusionswert S_{d} von < 3 m aufweist.

16. Abdichtbahn nach Anspruch 15, **dadurch gekennzeichnet, dass** die Abdichtbahn im wesentlichen aus wenigstens einem ersten Polymer und einem zweiten Polymer besteht, wobei die Schmelzviskosität des ersten Polymers bei gleichen Extrusionsbedingungen höher ist als die Schmelzviskosität des zweiten Polymers.

17. Abdichtbahn nach Anspruch 16, **dadurch gekennzeichnet, dass** die Schmelzviskosität des ersten Polymers um wenigstens einen Faktor zwei höher ist als die Schmelzviskosität des zweiten Polymers.

18. Abdichtbahn nach Anspruch 16 oder 17, **dadurch gekennzeichnet, dass** das erste und das zweite Polymer in der Abdichtbahn eine inhomogene Domänenstruktur bilden.

19. Verwendung eines Treibgas erzeugenden Treibmittels zur Erzeugung einer unregelmässigen, Wasserdichten und für Wasserdampf durchlässigen Polymerstruktur durch Extrudieren einer Abdichtbahn aus einem thermoplastischen Polymer und/oder einem Copolymer oder einer Mischung aus thermoplastischen Polymeren und/oder Copolymeren.

20. Verwendung einer in einem Verfahren nach einem der Ansprüche 1 bis 13 hergestellten Abdichtbahn oder einer Abdichtbahn nach einem der Ansprüche 14 bis 18 als Unterdachbahn oder Unterspannbahn in Steilbedachungen.

## Claims

1. A method for manufacturing a water-tight sealing strip (1) permeable to water vapour, with a surface structure (11), by extrusion of a polymer molten mass through a slot die (3), **characterised in that** to the polymer molten mass there is added a propellant producing a propellant gas, in such a concentration that after the exit of the sealing strip (1) out of the slot die (3) from the surface (2) of the sealing strip there exits propellant gas, wherein there is formed a surface structure.

2. A method according to claim 1, **characterised by** a polymer molten mass which contains at least one first polymer and one second polymer, wherein the melting viscosity of the first polymer under the same extrusion conditions is higher than the melting viscosity of the second polymer.

3. A method according to claim 2, **characterised in that** the part share of the first polymer with a higher melting viscosity in the polymer molten mass is more than 40 percent by weight, preferably 40 to 70 percent by weight, with respect to the polymer molten mass.

4. A method according to claim 2, **characterised in that** the melting viscosity of the first polymer is larger than the melting viscosity of the second polymer at least by a factor of two.

5. A method according to one of the claims 1 to 4, **characterised in that** by way of the exiting propellant gas, bubbles (10) are formed on the surface (2) of the sealing strip (1) which subsequently are torn open, in particular scraped off.

6. A method according to one of the claims 1 to 5, **characterised in that** for manufacturing the polymer molten mass there are applied polymers with a density of 0.8 to 1.7 g/cm³.

7. A method according to one of the claims 1 to 6, **characterised in that** the mixture is extruded at a temperature of 130°C to 220°C.

8. A method according to one of claims 1 to 7, **characterised in that** the polymer molten mass is extruded under a pressure in the extrusion nozzle of 250 to 100 bar, in particular about 200 bar.

9. A method according to one of the claims 1 to 8, **characterised in that** as a propellant an endothermic propellant is used.

10. A method according to one of claims 1 to 9, **characterised in that** as a propellant an exothermic propellant in particular in combination with an agent for minimising the breakdown temperature of the propellant is applied.

11. A method according to one of the claims 1 to 10, **characterised in that** the sealing strip after exit from the slot die is deposited onto a substrate material.

12. A method according to one of the claims 1 to 11, **characterised in that** to the polymer molten mass there are added cell regulators.

13. A method according to one of the claims 1 to 10, **characterised in that** the sealing strip after exiting the slot die is led with low tension over a cooled smoothing mechanism onto a winding up device.

14. An extruded, water-tight sealing strip permeable to water vapour of at least one thermoplastic polymer and/or copolymer or of a mixture of polymers and/or copolymers, wherein the sealing strip has a surface structure, **characterised in that** the sealing strip has a continuous foam structure and that the surface structure is formed by destroyed bubbles, in particular by projecting pores.

15. A sealing strip according to claim 12, **characterised in that** the sealing strip has a diffusion value S_{d} of < 3 m.

16. A sealing strip according to claim 15, **characterised in that** the sealing strip consists essentially of a first polymer and of a second polymer, wherein the melting viscosity of the first polymer under the same extrusion conditions is higher than the melting viscosity of the second polymer.

17. A sealing strip according to claim 16, **characterised in that** the melting viscosity of the first polymer is higher than the melting viscosity of the second polymer at least by a factor of two.

18. A sealing strip according to claim 16 or 17, **characterised in that** the first and the second polymer in the sealing strip form an inhomogeneous domain structure.

19. The use of a propellant producing a propellant gas for producing an irregular, water-tight polymer structure permeable to water vapour, by extruding a sealing strip of a thermoplastic polymer and/or a copolymer or a mixture of thermoplastic polymers and/or copolymers.

20. The use of a sealing strip manufactured in a method according to one of the claims 1 to 13 or a sealing strip according to one of the claims 14 to 18 as a roofing underlay or roof lining in steep roofings.

## Revendications

1. Procédé pour fabriquer une bande d'étanchéité (1) imperméable à l'eau et perméable à la vapeur d'eau et présentant une structure superficielle (11), par extrusion d'un polymère en fusion à partir d'une filière plate (3), **caractérisé en ce qu'**on ajoute au polymère en fusion un agent d'expansion produisant un gaz d'expansion, avec une concentration telle que du gaz d'expansion sort de la surface (2) de la bande d'étanchéité (1) une fois que celle-ci est sortie de la filière plate (3), ce qui forme une structure superficielle.

2. Procédé selon la revendication 1, **caractérisé par** un polymère en fusion qui contient au moins un premier polymère et un second polymère, la viscosité de fusion du premier polymère étant supérieure, dans des conditions d'extrusion identiques, à celle du second polymère.

3. Procédé selon la revendication 2, **caractérisé en ce que** la proportion du premier polymère à viscosité de fusion supérieure, dans le polymère en fusion, est de plus de 40 % en poids, de préférence de 40 à 70 % en poids, par rapport au polymère en fusion.

4. Procédé selon la revendication 2, **caractérisé en ce que** la viscosité de fusion du premier polymère est au moins deux fois supérieure à celle du second polymère.

5. Procédé selon l'une des revendications 1 à 4, **caractérisé en ce que** sous l'action du gaz d'expansion qui se dégage, il se forme à la surface (2) de la bande d'étanchéité (1) des bulles (10) qui sont ensuite ouvertes, notamment par raclage.

6. Procédé selon l'une des revendications 1 à 5, **caractérisé en ce que** pour fabriquer le polymère en fusion, on utilise des polymères d'une densité de 0,8 à 1,7 g/cm³.

7. Procédé selon l'une des revendications 1 à 6, **caractérisé en ce que** le mélange est extrudé à une température de 130°C à 220°C.

8. Procédé selon l'une des revendications 1 à 7, **caractérisé en ce que** le polymère en fusion est extrudé avec une pression de 250 à 100 bar, en particulier d'environ 200 bar, dans la filière d'extrusion.

9. Procédé selon l'une des revendications 1 à 8, **caractérisé en ce qu'**on utilise comme agent d'expansion un agent d'expansion endothermique.

10. Procédé selon l'une des revendications 1 à 9, **caractérisé en ce qu'**on utilise comme agent d'expansion un agent d'expansion exothermique, en particulier combiné à un agent pour minimaliser la température de décomposition dudit agent d'expansion.

11. Procédé selon l'une des revendications 1 à 10, **caractérisé en ce que** la bande d'étanchéité, après être sortie de la filière plate, est appliquée sur un support.

12. Procédé selon l'une des revendications 1 à 11, **caractérisé en ce qu'**on ajoute au polymère en fusion des régulateurs de cellules.

13. Procédé selon l'une des revendications 1 à 10, **caractérisé en ce que** la bande d'étanchéité, une fois sortie de la filière plate, est amenée sans tension, par l'intermédiaire d'un dispositif de lissage refroidi, sur un enrouleur.

14. Bande d'étanchéité extrudée, imperméable à l'eau et perméable à la vapeur d'eau, composée d'au moins un polymère et/ou copolymère thermoplastique ou d'un mélange de polymères et/ou de copolymères, cette bande d'étanchéité présentant une structure superficielle, **caractérisée en ce qu'**elle présente une structure alvéolaire continue, et **en ce que** la structure superficielle est formée par des bulles détruites, en particulier par des pores saillants.

15. Bande d'étanchéité selon la revendication 12, **caractérisée en ce qu'**elle présente une valeur de diffusion S_{d} < 3 m.

16. Bande d'étanchéité selon la revendication 15, **caractérisée en ce qu'**elle se compose essentiellement d'au moins un premier polymère et d'un second polymère, la viscosité de fusion du premier polymère étant supérieure, dans des conditions d'extrusion identiques, à celle du second polymère.

17. Bande d'étanchéité selon la revendication 16, **caractérisé en ce que** la viscosité de fusion du premier polymère est au moins deux fois supérieure à celle du second polymère.

18. Bande d'étanchéité selon la revendication 16 ou 17, **caractérisée en ce que** les premier et second polymères forment dans la bande d'étanchéité une structure de domaine hétérogène.

19. Utilisation d'un agent d'expansion générant un gaz d'expansion pour générer une structure polymère irrégulière, imperméable à l'eau et perméable à la vapeur d'eau, grâce à l'extrusion d'une bande d'étanchéité composée d'un polymère thermoplastique et/ou d'un copolymère ou d'un mélange de polymères et/ou de copolymères thermoplastiques.

20. Utilisation d'une bande d'étanchéité fabriquée suivant un procédé selon l'une des revendications 1 à 13, ou d'une bande d'étanchéité selon l'une des revendications 14 à 18 comme bande à placer ou à tendre sous des toits à forte pente.
